# EUROPÄISCHE PATENTANMELDUNG

(11) **EP 2 960 014 A2**
(43) Veröffentlichungstag der Anmeldung: **30.12.2015**
(21) Anmeldenummer: 15171791.5
(22) Anmeldetag: 12.06.2015
(51) Int. Cl.: B24B 7/18

(54) **SCHLEIF- BZW. FRÄSVORRICHTUNG ZUR GEBÄUDESANIERUNG**

(30) Priorität: 26.06.2014 DE 102014009296
(71) Anmelder: Lämmle, Stefan, 88436 Eberhardzell-Füramoos (DE)
(72) Erfinder: Lämmle, Stefan, 88436 Eberhardzell-Füramoos (DE)
(74) Vertreter: Otten, Roth, Dobler & Partner mbB Patentanwälte

(57) **Zusammenfassung**

Vorgeschlagen wird eine Schleif- und/oder Fräsvorrichtung (1) zum Abschleifen und/oder Fräsen von Flächen wie Wänden, Decken und Böden oder dergleichen eines Gebäudes bei dessen Sanierung, umfassend wenigstens eine motorisch antreibbare Schleifscheibe und/oder Fräse (4) zur abrasiven Bearbeitung der Fläche und/oder der Beschichtung der Fläche. Die besonders effektive Schleif- und/oder Fräsvorrichtung umfasst einen Schleif- und/oder Fräskopf (3), der an einem Bewegungsarm (6), insbesondere am Bewegungsarm eines Industrieroboters (2), eines Fahrzeugs, eines Baggers, eines Staplers, einer Ameise, eines Radladers, eines Krans oder dergleichen anbringbar ist.

## Beschreibung

Die Erfindung betrifft eine Schleif- und/oder Fräsvorrichtung zum Abschleifen und/oder Fräsen von Flächen wie Wänden, Decken und Böden oder dergleichen eines Gebäudes bei dessen Sanierung nach dem Oberbegriff des Anspruchs 1, einen Bewegungsarm nach dem Oberbegriff des Anspruchs 11, einen Roboter nach dem Oberbegriff des Anspruchs 13 sowie eine Drehvorrichtung bzw. einen Drehkranz nach dem Oberbegriff des Anspruchs 15.

Aus dem Stand der Technik sind im Zusammenhang mit der Sanierung von Gebäuden entweder nur Handschleifgeräte oder an Schienen eindimensional verfahrbare Schleifgeräte bekannt.

Aufgabe der Erfindung ist es, Schleif- bzw. Fräsvorgänge an Gebäudeflächen bei der Gebäudesanierung effizienter gestalten zu können.

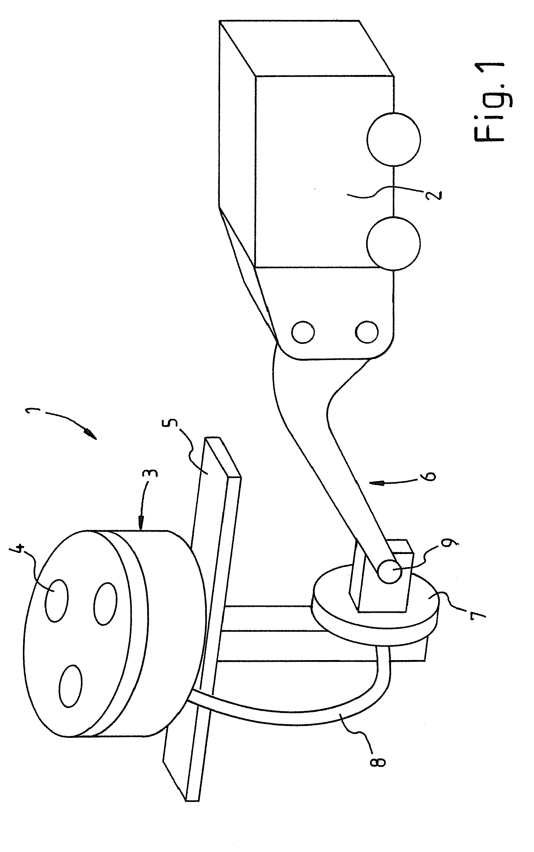

Die erfindungsgemäße Schleif- und/oder Fräsvorrichtung stellt einen Schleifkopf dar, der grundsätzlich als Wechselkopf (vgl. z.B. Figur 1: Schleif-/Fräskopf 3 mit schwenkbarer Ankopplungsvorrichtung 7) eingesetzt werden kann, unter anderem bei Industrierobotern, Fahrzeugen, Baggern, Staplern, Ameisen, Radladern, Kränen usw. Industrieroboter, die beispielsweise mit Abrisshämmern ausgestattet werden, können somit vielfältiger verwendet werden, indem der Abrisshammer am Bewegungsarm 6 des Roboters 2 durch die erfindungsgemäße Schleif- bzw. Fräsvorrichtung ausgetauscht wird. Die Gelenke 7, 9 erhöhen die Bewegungsfreiheit und ermöglichen eine Positionierung der Werkzeuge gegenüber den zu bearbeitenden Flächen.

Hierdurch wird insbesondere ermöglicht, dass folgende Nachteile aus dem Stand der Technik beseitigt werden können: Bei dem Einsatz herkömmlicher Handschleifgeräte bei der Gebäudesanierung, wie sie im Stand der Technik üblich waren, war es notwendig, dass die entsprechende Bedienperson sich unmittelbar in der Nähe des Bearbeitungsbereichs befand und das Bearbeitungswerkzeug, nämlich das Handschleifgerät, in den Händen hielt. Somit besteht nach dem Stand der Technik grundsätzlich die Gefahr, dass bei Handschleifgeräten die Bedienperson mit gesundheitsschädlichen Stäuben oder sonstigen Partikeln eher in Kontakt kommt.

Bei aus dem Stand der Technik bekannten Schleifgeräten, die auf Schienen geführt werden, war es notwendig, diese an der Wand, die abgeschliffen werden soll, zu fixieren. Diese herkömmlichen Schleifgeräte konnten dann entlang einer Linie verfahren werden und somit nur einen sehr eng umgrenzten Bereich abschleifen. Anschließend musste die gesamte Vorrichtung versetzt werden, und zwar so lange, bis die gesamte abzuschleifende Fläche erfasst werden konnte. Dieses Verfahren aus dem Stand der Technik war folglich sehr aufwendig.

Mit Hilfe der Schleif-/Fräsvorrichtung 1 (vgl. Figur 1) gemäß der Erfindung können diese Nachteile beseitigt werden. Der entsprechende Roboter: Roboter 2) kann im Inneren eines Gebäudes (etwa von einer Kamera überwacht bzw. gesteuert) fahren, ohne dass die Bedienperson in der Nähe sein muss und den entsprechenden Stäuben ausgesetzt wäre.

Gerade dann, wenn z. B. eine Decke abgeschliffen wird, kann der Schleifkopf 3 in Position gebracht und sehr präzise verfahren werden, vorzugsweise auch dann, wenn der Abstand zwischen Boden und Decke konstant ist. Dies ermöglicht eine besondere schnelle und kostengünstige Bearbeitung. Außerdem können in geringerer Zeit wesentlich größere Flächen bearbeitet werden. Eine Sensorvorrichtung zur Einstellung des Anpressdrucks und die bewegliche, insbesondere schwenkbare Lagerung der Schleifscheiben bzw. der Fräsen 4 ermöglichen eine sehr genaue Bearbeitung, die über die gesamte Fläche praktisch konstant gehalten werden kann.

Die Absaugvorrichtung 8 ermöglicht es in vorteilhafterweise, bei dieser Ausführungsform der Erfindung die entsprechenden Stäube und Partikel abzusaugen und zu entsorgen, sodass nach Möglichkeit keine Gesundheitsgefährdungen stattfinden.

Die Vorrichtung wird beim Abriss beziehungsweise bei der Sanierung von Gebäuden verwendet. Insbesondere kann sie auch in vorteilhafterweise dort eingesetzt werden, wo zu befürchten ist, dass die Wände zum Teil radioaktiv verseucht worden sind, wie dies beispielsweise bei Gebäuden von Kernkraftwerken der Fall sein kann. Aber auch bei sonstigen Wänden, die beispielsweise mit Deckschichten, Kleberesten usw. behaftet sind, kann eine solche Abschleifmaßnahme notwendig und die vorgeschlagenen Vorrichtungen gem. der Erfindung vorteilhaft eingesetzt werden.

Bei einem weiteren vorteilhaften Ausführungsbeispiel der Erfindung ist eine Traverse bzw. Schiene 5 zum Verfahren der Schleifkopfs bzw. der Fräse vorgesehen. Das Trägergerät, also der Roboter, der Bagger, der Stapler, die Ameise, der Radlader, der Kran etc. drückt lediglich die Traverse mit entsprechenden Abstandshaltern an die zu bearbeitende Fläche. Unebenheiten können somit ausgeglichen werden. Dies ermöglicht eine gute Ausnutzung möglichst vieler Bewegungs-/ Freiheitsgrade.

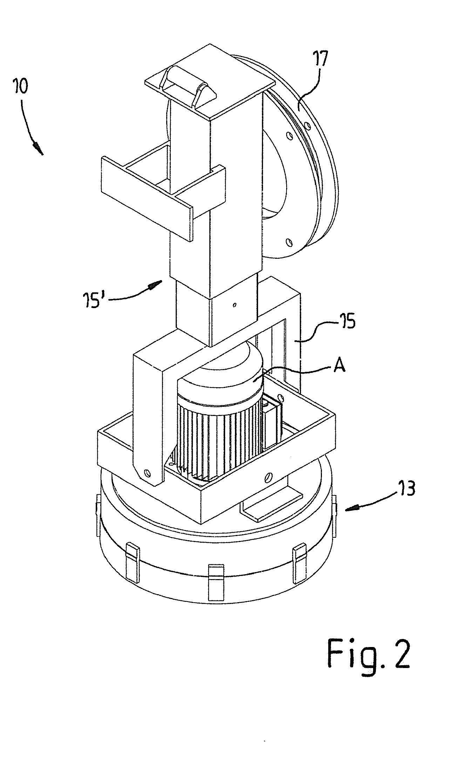

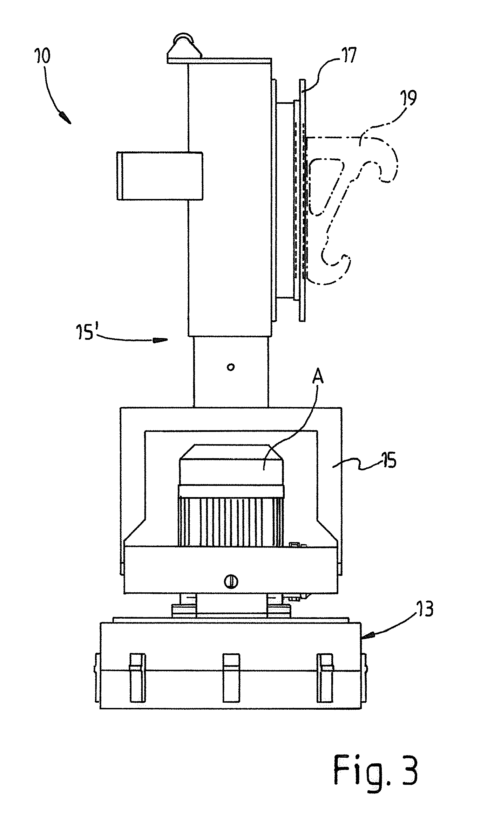

In den Figuren 2 und 3 ist eine ähnliche Schleif- bzw. Fräsvorrichtung 10 dargestellt wie in Figur 1. Sie umfasst ebenfalls einen Schleif- bzw. Fräskopf 13 sowie eine schwenkbare Ankopplungsvorrichtung 17. Vorgesehen ist aber zusätzlich noch ein eigener Antriebsmotor A des Schleif- bzw. Fräskopfes 13. Anstelle einer Traverse in Form einer Schiene, wie sie in Figur 1 mit Bezugszeichen 5 dargestellt ist, ist im vorliegenden Fall in den Figuren 2 und 3 der Schleif-/Fräskopf 13 über ein Kardangestell 15 befestigt. Das Kardangestell 15 ist über eine Teleskopvorrichtung 15' ausfahrbar, sodass hierdurch der Schleif-/Fräskopf 13 zum Beispiel senkrecht zu der zu bearbeitenden Fläche verfahren werden kann, bis er optimal zur dieser positioniert ist. Auch der Anpressdruck des Schleif-/Fräskopfs 13 gegenüber der zu bearbeitenden Fläche kann hierdurch eingestellt werden. Das Gestell 15 ist als Kardan-Aufhängung ausgebildet, sodass der Schleif- bzw. Fräskopf 13 mit möglichst vielen Freiheitsgraden verschwenkt und an die zu bearbeitende Oberfläche angepasst werden kann.

In Figur 3 ist mit Bezugszeichen 19 eine Aufnahmevorrichtung für Bagger eingezeichnet, welche an die schwenkbare Ankopplungsvorrichtung 17 befestigt werden kann.

### Bezugszeichenliste:

- 1: Schleif- / Fräsvorrichtung
- 2: Verfahrbarer Roboter
- 3: Schleif-/Fräskopf
- 4: Schleifscheibe / Fräse
- 5: Traverse
- 6: Bewegungsarm
- 7: Ankopplungsvorrichtung (schwenkbar)
- 8: Absaugvorrichtung
- 9: Gelenk
- 10: Schleif-/Fräsvorrichtung
- 13: Schleif-/Fräskopf
- 15: Kardanaufhängung / Kardangestell
- 15': Teleskopvorrichtung
- 17: schwenkbare Ankopplungsvorrichtung
- 19: Aufnahmevorrichtung für Bagger
- A: Antriebsmotor

## Patentansprüche

1. Schleif- und/oder Fräsvorrichtung (1, 10) zum Abschleifen und/oder Fräsen von Flächen wie Wänden, Decken und Böden oder dergleichen eines Gebäudes bei dessen Sanierung, umfassend wenigstens eine motorisch antreibbare Schleifscheibe und/oder Fräse (4) zur abrasiven Bearbeitung der Fläche und/oder der Beschichtung der Fläche, **dadurch gekennzeichnet, dass** die Schleif- und/oder Fräsvorrichtung einen Schleif- und/oder Fräskopf (3, 13) umfasst, der an einem Bewegungsarm (6), insbesondere am Bewegungsarm eines Industrieroboters (2), eines Fahrzeugs, eines Baggers, eines Staplers, einer Ameise, eines Radladers, eines Krans oder dergleichen anbringbar ist.

2. Schleif- und/oder Fräsvorrichtung nach einem der vorgenannten Ansprüche, **dadurch gekennzeichnet, dass** eine Antriebskupplung vorgesehen ist, um die Schleifscheibe mit einer Antriebsvorrichtung zu verbinden, vorzugsweise mit einer Antriebswelle, einem Hydraulikantrieb, einem Pneumatikantrieb, einem Elektroantrieb oder dergleichen.

3. Schleif- und/oder Fräsvorrichtung nach einem der vorgenannten Ansprüche, **dadurch gekennzeichnet, dass** die Antriebskupplung dazu ausgebildet ist, an ein Kupplungsgegenstück am Bewegungsarm anzukoppeln.

4. Schleif- und/oder Fräsvorrichtung nach einem der vorgenannten Ansprüche, **dadurch gekennzeichnet, dass** die wenigstens eine Schleifscheibe und/oder Fräse beweglich, insbesondere schwenkbar gelagert ist, um sich hinsichtlich ihrer Ausrichtung an die Position der Fläche in Bezug auf den Schleif- bzw. Fräskopf anpassen zu können.

5. Schleif- und/oder Fräsvorrichtung nach einem der vorgenannten Ansprüche, **dadurch gekennzeichnet, dass** eine Sensorvorrichtung vorgesehen ist, um den Anpressdruck der wenigstens einen Schleifscheibe bzw. Fräse gegen die abzuschleifende Fläche zu erfassen.

6. Schleif- und/oder Fräsvorrichtung nach einem der vorgenannten Ansprüche, **dadurch gekennzeichnet, dass** die Sensorvorrichtung einen Pneumatikzylinder und/oder Hydraulikzylinder umfasst, um den Anpressdruck zu bestimmen, wobei der Anpressdruck auf die wenigstens eine Schleifscheibe bzw. Fräse in einen Gasdruck bzw. Öldruck im Pneumatikzylinder bzw. Hydraulikzylinder umsetzbar ist.

7. Schleif- und/oder Fräsvorrichtung nach einem der vorgenannten Ansprüche, **dadurch gekennzeichnet, dass** eine Vorrichtung zur Kontrolle des Anpressdrucks der wenigstens einen Schleifscheibe bzw. Fräse vorgesehen ist, die dazu ausgebildet ist, anhand des von der Sensorvorrichtung bestimmten Anpressdrucks eine Korrektur des Anpressdrucks vorzunehmen, indem das Gas im Pneumatikzylinder bzw. das Öl im Hydraulikzylinder mit Druck beaufschlagt wird und/oder der Druck des Gases im Pneumatikzylinder bzw. des Öls im Hydraulikzylinder reduziert und ein entsprechender Druck auf die Schleifscheibe bzw. Fräse ausgeübt wird.

8. Schleif- und/oder Fräsvorrichtung nach einem der vorgenannten Ansprüche, **dadurch gekennzeichnet, dass** eine Vorrichtung zur Kontrolle des Anpressdrucks der wenigstens einen Schleifscheibe bzw. Fräse vorgesehen ist, die dazu ausgebildet ist, anhand des von der Sensorvorrichtung bestimmten Anpressdrucks eine Korrektur des Anpressdrucks vorzunehmen, indem sie ein Signal zur Korrektur der Position und/oder der Bewegung des Bewegungsarms bereitstellt.

9. Schleif- und/oder Fräsvorrichtung nach einem der vorgenannten Ansprüche, **dadurch gekennzeichnet, dass** eine Absaugvorrichtung (8) vorgesehen ist, um von der Fläche abgetragene Partikel abzusaugen, und/oder dass wenigstens eine Absaugleitung integriert ist, die an eine Absaugvorrichtung ankoppelbar ist, um von der Fläche abgetragene Partikel abzusaugen.

10. Schleif- und/oder Fräsvorrichtung nach einem der vorgenannten Ansprüche, **dadurch gekennzeichnet, dass** eine Traverse und/oder Schiene (5) zur beweglichen, insbesondere verfahrbaren Lagerung der Schleif- und/oder Fräsvorrichtung mit einer einstellbaren Vortriebsvorrichtung zum Vortrieb der Schleif-/Fräsvorrichtung entlang einer Traverse bzw. Schiene vorhanden ist/sind und/oder dass eine Kardanaufhängung (15) zur beweglichen, insbesondere schwenkbaren Lagerung des Schleif- und/oder Fräskopfes (13) vorgesehen ist.

11. Bewegungsarm (6) zur Durchführung einer Bewegung, insbesondere Bewegungsarm eines Industrieroboters, eines Fahrzeugs, eines Baggers, eines Staplers, einer Ameise, eines Radladers, eines Krans oder dergleichen, **dadurch gekennzeichnet, dass** eine Ankopplungsvorrichtung (7, 17) zur Ankopplung einer Schleif- und/oder Fräsvorrichtung nach einem der vorgenannten Ansprüche vorhanden ist.

12. Bewegungsarm nach einem der vorgenannten Ansprüche, **dadurch gekennzeichnet, dass** wenigstens ein Gelenk (7, 9, 17) zur Unterteilung des Bewegungsarmes in einen weiteren Bewegungsabschnitt und zur Durchführung einer Schwenkbewegung des Bewegungsabschnittes, an welchem die Schleif- und/oder Fräsvorrichtung ankoppelbar ist, vorgesehen ist.

13. Roboter (2), insbesondere verfahrbarer und fernlenkbarer Industrieroboter, **dadurch gekennzeichnet, dass** ein verfahrbarer Bewegungsarm nach einem der vorgenannten Ansprüche vorgesehen ist.

14. Roboter nach einem der vorgenannten Ansprüche, **dadurch gekennzeichnet, dass** eine Kontrollvorrichtung zur Kontrolle der Bewegung des Bewegungsarms vorgesehen ist, die wenigstens einen Signaleingang zur Eingabe von Signalen zur Korrektur der Position und/oder der Bewegung des Bewegungsarms umfasst.

15. Drehvorrichtung, Drehkranz oder dergleichen zur Bearbeitung von verschiedenen Ebenen wie zum Beispiel einer Decke, einer Wand, eines Boden oder einer Schräge, **dadurch gekennzeichnet, dass** eine Schleif- und/oder Fräsvorrichtung nach einem der vorgenannten Ansprüche vorgesehen ist.
